# EUROPÄISCHE PATENTANMELDUNG

(11) **EP 4 725 921 A1**
(43) Veröffentlichungstag der Anmeldung: **15.04.2026**
(21) Anmeldenummer: 25206063.7
(22) Anmeldetag: 01.10.2025
(51) Int. Cl.: C03B 40/027, B05B 7/24, B05B 7/32, F16N 7/34

(54) **VORFORMSCHMIERVORRICHTUNG FÜR DIE VORFORMEN EINER STATION EINER GLASFORMMASCHINE**

(30) Priorität: 04.10.2024 DE 202024105720 U
(71) Anmelder: T&T Turnov s.r.o., 51101 Turnov (CZ)
(72) Erfinder: THEMANN, Rolf, 51101 Turnov (CZ); TITLBACH, Filip, 51212 Jesenný (CZ)
(74) Vertreter: Moser Götze & Partner Patentanwälte mbB

(57) **Zusammenfassung**

Eine Vorformschmiervorrichtung für die Vorformen einer Station einer Glasformmaschine hat Sprühdüsen (3), die jeweils einer Vorformhälfte der Station zugeordnet sind und mittels denen die Innenflächen der Vorformhälften mit Schmiermittel besprühbar sind, Schmiermittelzuleitungen (4), mittels denen die Sprühdüsen (3) an eine Schmiermittelversorgung der Glasformmaschine anschließbar sind, Schmiermitteldosierventile (6), die jeweils in einer Schmiermittelzuleitung (4) angeordnet sind und mittels denen ein den Sprühdüsen (3) zugeleitetes Schmiermittel dosierbar ist, und Druckluftzuleitungen (5), mittels denen die Sprühdüsen (3) an eine Druckluftversorgung der Glasformmaschine anschließbar sind und deren Druckluftbeaufschlagung mittels eines Steuerventils steuerbar ist.

Um eine derartige Vorformschmiervorrichtung zur Verfügung zu stellen, die im Betrieb einer Glasformmaschine einen im Vergleich zum Stand der Technik erheblich geringeren Aufwand verursacht und die hochgradig an unterschiedliche in der Glasformmaschine herzustellende Glasartikel anpassbar ist, wird vorgeschlagen, dass die Sprühdüsen (3), die Schmiermitteldosierventile (6), die Schmiermittelzuleitungen (4), die Druckluftzuleitungen (5) und die Steuerventile in die Station der Glasformmaschine integriert sind.

## Beschreibung

Die Erfindung bezieht sich auf eine Vorformschmiervorrichtung für die Vorformen einer Station einer Glasformmaschine mit Sprühdüsen, die jeweils einer Vorformhälfte der Station zugeordnet sind und mittels denen die Innenflächen der Vorformhälften mit Schmiermittel besprühbar sind, Schmiermittelzuleitungen, mittels denen die Sprühdüsen an eine Schmiermittelversorgung der Glasformmaschine anschließbar sind, Schmiermitteldosierventilen, die jeweils in einer Schmiermittelzuleitung angeordnet sind und mittels denen ein den Sprühdüsen zugeleitetes Schmiermittel dosierbar ist, und Druckluftzuleitungen, mittels denen die Sprühdüsen an eine Druckluftversorgung der Glasformmaschine anschließbar sind und deren Druckluftbeaufschlagung mittels eines Steuerventils steuerbar ist.

Mittels einer derartigen Vorformschmiervorrichtung können die an einer rechten und die an einer linken Seite der Station angeordneten Vorformhälften und zugeordneten Mündungsringhälften an ihren Innenflächen mit Schmiermittel besprüht werden. Jede Sprühdüse einer solchen Vorformschmiervorrichtung ist hinsichtlich ihres Abstrahlwinkels so ausgerichtet und hinsichtlich ihres Abstrahlkegels so ausgelegt, dass sie die gesamte oder doch nahezu gesamte Innenfläche der ihr gegenüberliegenden Vorformhälfte mit Schmiermittel beaufschlagen kann. Zum Besprühen wird ein Gemisch aus Luft und Formenschmiermittel bzw. Formenschmieröl verwendet, das als Sprühnebel aus der Sprühdüse abgestrahlt wird.

Ausgehend von dem vorstehend geschilderten Stand der Technik liegt der Erfindung die Aufgabe zugrunde, eine Vorformschmiervorrichtung der eingangs geschilderten Gattung zur Verfügung zu stellen, die im Betrieb einer Glasformmaschine einen im Vergleich zum Stand der Technik erheblich geringeren Aufwand verursacht und die hochgradig an unterschiedliche in der Glasformmaschine herzustellende Glasartikel anpassbar ist.

Diese Aufgabe wird erfindungsgemäß dadurch gelöst, dass die Sprühdüsen, die Schmiermitteldosierventile, die Schmiermittelzuleitungen, die Druckluftzuleitungen und die Steuerventile in die Station der Glasformmaschine integriert sind. Irgendwelche glasformmaschinenseitige technisch-konstruktive Anpassungen können dann vollständig entfallen, da alle Anpassungen der Vorformschmiervorrichtung an die geänderten, mittels der Glasformmaschine zu produzierenden Glasartikel bzw. an die entsprechend angepassten Vorformen stationsseitig realisiert werden können.

Zweckmäßigerweise sind mittels der Sprühdüsen der erfindungsgemäßen Vorformschmiervorrichtung außer den Innenflächen der Vorformhälften auch die Innenflächen von den Vorformhälften zugeordneten Mündungsringhälften besprühbar.

Die Sprühdüsen der Vorformschmiervorrichtung sind vorteilhaft so ausgerichtet, dass sie die Innenflächen der ihnen zugeordneten Vorformhälften und die Innenflächen der ihnen zugeordneten Mündungsringhälften vollständig mit Schmiermittel besprühen.

Wenn die Sprühdüsen, Schmiermitteldosierventile, Schmiermittelzuleitungen, Steuerventile und Druckluftzuleitungen in der Station der Glasformmaschine verbaut sind, wird der Aufwand für die technisch-konstruktive Anpassung der Vorformschmiervorrichtung bei einer Änderung des Produktionsprogramms einer Glasformmaschine oder beim Ersatz einer defekten Station weiter reduziert.

Vorteilhaft erfolgt der Betrieb der erfindungsgemäßen Vorformschmiervorrichtung automatisch und sind deren Schmiermitteldosierventile und Steuerventile an eine Steuervorrichtung der Glasformmaschine anschließbar.

Hierdurch wird zum Beispiel die Möglichkeit eröffnet, für jede Sprühdüse der erfindungsgemäßen Vorformschmiervorrichtung eine Schmierbetriebszeit und/oder ein Schmierintervall durch Regelung des Betriebs der Schmiermitteldosierventile und der Steuerventile mittels der glasformmaschinenseitigen Steuervorrichtung exakt vorzugeben.

Wenn die erfindungsgemäße Vorformschmiervorrichtung mittels der glasformmaschinenseitigen Steuervorrichtung so gesteuert wird, dass die auf der Seite eines Vorformhälftenhalters der Station, der die an der einen Seite angeordneten Vorformhälften der Station hält, vorgesehenen Sprühdüsen die Innenflächen der an einem anderen Vorformhälftenhalter der Station gehaltenen Vorformhälften mit Schmiermittel besprühen, wenn die Vorformen beim Verschwenken eines Invertmechanismus der Station zu deren Fertigformseite geöffnet sind, und die auf der Seite des anderen Vorformhälftenhalters der Station, der die an der anderen Seite angeordneten Vorformhälften der Station hält, vorgesehenen Sprühdüsen die Innenflächen der an dem einen Vorformhälftenhalter der Station gehaltenen Vorformhälften mit Schmiermittel besprühen, wenn die Vorformen bei einem folgenden Verschwenken des Invertmechanismus der Station zu deren Fertigformseite geöffnet sind, kann gesichert werden, dass die Schmiermittelversorgung der auf der einen Seite angeordneten Vorformhälften und Mündungsringhälften nicht durch die Schmiermittelversorgung der auf der anderen Seite angeordneten Vorformhälften und Mündungsringhälften beeinträchtigt wird.

Vorteilhaft sind die Sprühdüsen, die Schmiermitteldosierventile, die Schmiermittelzuleitungen und die Druckluftzuleitungen an Mündungskühltürmen angeordnet, die ihrerseits an der Station angeordnet und in Bezug auf die Öffnungsstellung des einen bzw. des anderen Vorformhälftenhalters an der Station fixierbar sind. Hierdurch kann mit einem geringen Aufwand stets eine optimale Beaufschlagung der Innenflächen der Vorformen und Mündungsringe sichergestellt werden.

Eine Anpassung der Vorformschmiervorrichtung der Station an unterschiedliche, in die Station einsetzbare Vorformen für unterschiedliche Glasartikel kann ermöglicht werden, wenn gemäß einer vorteilhaften Weiterbildung der erfindungsgemäßen Vorformschmiervorrichtung die Mündungskühltürme an der Station in Vertikalrichtung verstellbar angeordnet sind.

Wenn die elektrischen Zuleitungen der erfindungsgemäßen Vorformschmiervorrichtung in die Station integriert sind, kann der Austausch einer Station an der Glasformmaschine weiter erleichtert werden.

Um einen derartigen Austausch einer Station noch schneller realisieren zu können, wird gemäß einer vorteilhaften Weiterbildung der erfindungsgemäßen Vorformschmiervorrichtung vorgeschlagen, die elektrischen Zuleitungen, die Schmiermittelzuleitungen und die Druckluftzuleitungen mittels Schnellkupplungen mit der elektrischen Energieversorgung, der Schmiermittelversorgung und der Druckluftversorgung der Glasformmaschine verbindbar zu gestalten.

In besonders zweckmäßiger Weise ist die erfindungsgemäße Vorformschmiervorrichtung Bestandteil einer schnell wechselbaren Station für eine Glasformmaschine.

Im Folgenden wir die Erfindung anhand einer Ausführungsform unter Bezugnahme auf die

Zeichnung näher erläutert. Es zeigen:
- Figur 1: den oberen Bereich eines Teils einer Station einer Glasformmaschine, der unterhalb der Vorformhälften und Mündungsringhälften der Station angeordnet ist; und
- Figur 2: eine perspektivische Darstellung eines Mündungskühlturms.

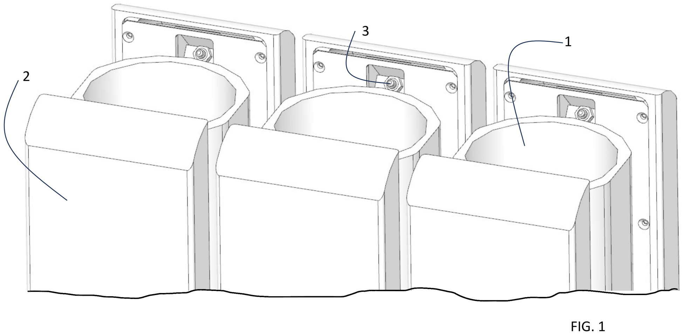

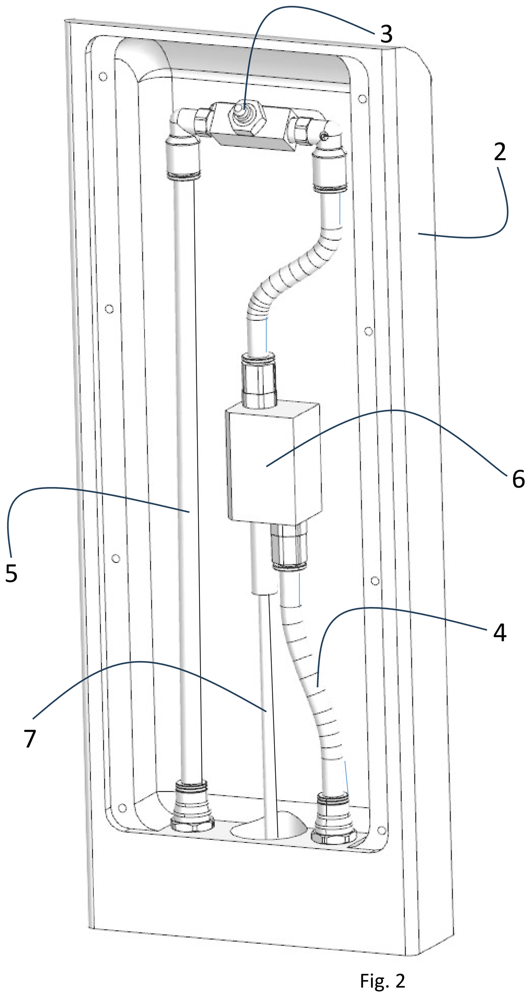

Zu einer Station einer Glasformmaschine, bei der es sich um eine IS-Glasformmaschine oder eine ISX-Glasformmaschine handeln kann, gehören in den Figuren 1 und 2 nicht dargestellte Vorformen mit Vorformhälften und diesen Vorformhälften zugeordneten Mündungsringhälften. Die Mündungsringhälften sind in Vertikalrichtung unterhalb der Vorformhälften angeordnet. Im Betrieb der Station werden nach der Herstellung der Glaskülbel in den Vorformen bzw. Mündungsringen diese Glaskülbel an ihren unten angeordneten Mündungsbereichen mittels eines Invertmechanismus der Station erfasst und durch eine Schwenkbewegung des Invertmechanismus um 180 Grad von den Vorformen zu Fertigformen der Station verbracht, wobei die Glaskülbel in den Fertigformen mit ihren Mündungsbereichen nach oben angeordnet sind. Unterhalb der Vorformen bzw. der Mündungsringe der Station ist der in Figur 1 an seinem oberen Bereich dargestellte Teil der Station angeordnet.

Dieser Teil der Station hat drei Pegelführungen 1, in denen jeweils ein Pegel der Station geführt ist, der einer der im vorliegenden Fall drei Vorformen der Station zugeordnet ist. Jeder Pegelführung 1 ist, wie sich aus Figur 1 ergibt, an ihrer Vorderseite und an ihrer Rückseite jeweils ein Mündungskühlturm 2 zugeordnet. Nahe dem oberen Ende jedes Mündungskühlturms 2 weist dieser eine Sprühdüse 3 auf. Entsprechend sind jeder Vorform bzw. dem dieser Vorform zugeordneten Mündungsring zwei Sprühdüsen 3 zugeordnet. Die Sprühdüsen 3 sind hinsichtlich ihres Abstrahlwinkels so ausgerichtet, dass sie sowohl die Innenseite der ihnen gegenüberliegenden Mündungsringhälfte als auch die Innenseite der dieser Mündungsringhälfte zugeordneten Vorformhälfte mit einem Schmiermittel besprühen.

Die Mündungskühltürme 2 der im Übrigen nicht dargestellten Station sind an der Station in Vertikalrichtung verstellbar gehaltert. Hierdurch wird ermöglicht, dass eine umfängliche Schmierung der Innenseiten von Vorformhälften und Mündungsringhälften auch dann möglich ist, wenn an der Station mittels unterschiedlicher Vorformen und Mündungsringe in ihren Abmessungen unterschiedliche Glaskülbel hergestellt werden. Die Position der Mündungskühltürme 2 kann dann jeweils so gewählt und fixiert werden, dass die Sprühdüsen 3 für eine korrekte Schmierung der Innenflächen sowohl der Mündungsringhälften als auch der Vorformhälften Sorge tragen können.

Jede Sprühdüse 3 ist derjenigen Vorformhälfte bzw. Mündungsringhälfte zugeordnet, die oberhalb des in Figur 1 gezeigten Bereichs des die Mündungskühltürme 2 halternden Teils der Station der jeweiligen Sprühdüse 3 gegenüberliegt. Wenn die Vorform und die Mündungsringe sich in ihrer geöffneten Stellung befinden, kann die Sprühdüse 3 die Innenfläche sowohl der ihr gegenüberliegenden Mündungsringhälfte als auch der ihr gegenüberliegenden Vorformhälfte mit Schmiermittel besprühen.

Die Sprühdüse 3 wird, wie insbesondere aus Figur 2 hervorgeht, über eine Schmiermittelzuleitung 4 mit Schmiermittel und über eine Druckluftzuleitung 5 mit Druckluft versorgt. In der Sprühdüse 3 wird das Schmiermittel mit der Druckluft zusammengeführt und dann zwecks Schmierung der Innenflächen der Mündungsringhälfte und der Vorformhälfte abgestrahlt.

In der am Mündungskühlturm 2 vorgesehenen bzw. integrierten Schmiermittelzuleitung 4 ist ein Schmiermitteldosierventil 6 angeordnet. Mittels dieses Schmiermitteldosierventils 6 ist die der Sprühdüse 3 zugeleitete Schmiermittelmenge exakt dosier- bzw. einstellbar. Das Schmiermitteldosierventil 6 wird mittels einer ebenfalls am Mündungskühlturm 2 vorgesehenen bzw. integrierten elektrischen Zuleitung 7 mit elektrischer Energie versorgt. Die Druckluftzuleitung 5, die ebenfalls am Mündungskühlturm 2 angeordnet bzw. integriert ist, ist mit den entsprechenden Druckluftzuleitungen 5 der anderen Mündungskühltürme 2 an ein in den Figuren nicht dargestelltes stationsseitiges Steuerventil angeschlossen, mittels dem die Druckluftbeaufschlagung der Sprühdüsen 3 steuer- bzw. regelbar ist.

Die mündungskühlturmseitigen Schmiermittelzuleitungen 4, von denen im dargestellten Ausführungsbeispiel der Vorformschmiervorrichtung sechs vorhanden sind, sind an eine Schmiermittelversorgung der die vorstehend erwähnte Station aufweisenden Glasformmaschine anschließbar. Die Druckluftzuleitungen 5 der drei auf einer Seite angeordneten Mündungskühltürme 2 sind an die Druckluftversorgung der Glasformmaschine anschließbar, wobei die Steuerung bzw. Regelung der Druckluftbeaufschlagung der drei den an einer Seite angeordneten Mündungskühltürmen 2 zugeordneten Druckluftzuleitungen 5 mittels des bereits erwähnten Steuerventils realisierbar ist.

Das Schmiermitteldosierventil 6 und das die Druckluftbeaufschlagung der Druckluftzuleitung 5 regelnde Steuerventil sind an eine Steuervorrichtung der Glasformmaschine anschließbar. Entsprechend kann mittels der glasformmaschinenseitigen Steuervorrichtung für die drei Sprühdüsen 3, mittels denen die drei diesen gegenüberliegenden Vorformhälften bzw. Mündungsringhälften auf ihren Innenflächen mit Schmiermittel besprüht werden, exakt die Schmierbetriebszeit, während der die Innenflächen mit Schmiermittel besprüht werden, und das Schmierintervall, das zwei Schmierbetriebszeiten voneinander trennt, vorgegeben werden. Entsprechend werden die im dargestellten Ausführungsbeispiel drei Sprühdüsen 3, die den ihnen gegenüberliegenden drei Vorformhälften und Mündungsringhälften zugeordnet sind, die drei ihnen gegenüberliegenden Vorformhälften und Mündungsringhälften auf ihren Innenflächen besprühen, wenn die Vorformen beim Verschwenken des Invertmechanismus von der Vorformseite zur Fertigformseite der Station geöffnet sind. Bei dem nachfolgenden Verschwenkvorgang des Invertmechanismus von der Vorformseite zur Fertigformseite, bei dem die Vorformen wiederum geöffnet sind, werden dann die drei Sprühdüsen 3 der drei anderen Mündungskühltürme 2 in Betrieb gesetzt. Entsprechend kann während des normalen Betriebsablaufs der Station für eine ordnungsgemäße Schmierung der Innenflächen der Vorformen und Mündungsringe Sorge getragen werden.

Die in die Mündungskühltürme 2 integrierten Schmiermittelzuleitungen 4, Druckluftzuleitungen 5 und elektrischen Zuleitungen 7 sind über Schnellkupplungen mit der Schmiermittelversorgung, der Druckluftversorgung bzw. der elektrischen Energieversorgung der Glasformmaschine verbindbar. Entsprechend kann die vorstehend geschilderte Vorformschmiervorrichtung Bestandteil einer schnell wechselbaren Station für eine Glasformmaschine sein.

Jede Sprühdüse 3 ist mittels ihres an die glasformmaschinenseitige Steuervorrichtung angeschlossenen Schmiermitteldosierventils 6 sowie des ihrer Druckluftzuleitung 5 zugeordneten und ebenfalls an die glasformmaschinenseitige Steuervorrichtung angeschlossenen Steuerventils mittels der glasformmaschinenseitigen Steuervorrichtung steuer- und regelbar. Durch die glasformmaschinenseitige Steuervorrichtung ist entsprechend der Betrieb der Sprühdüse 3 hinsichtlich Schmierbetriebszeit und Schmierintervall an den Betrieb der jeweiligen Glasformmaschine anpassbar.

Grundsätzlich besteht selbstverständlich auch die Möglichkeit, die Innenflächen der Mündungsringhälften in anderen Zyklen mit Schmiermittel zu beaufschlagen als die Vorformhälften.

## Patentansprüche

1. Vorformschmiervorrichtung für die Vorformen einer Station einer Glasformmaschine, mit Sprühdüsen (3), die jeweils einer Vorformhälfte der Station zugeordnet sind und mittels denen die Innenflächen der Vorformhälften mit Schmiermittel besprühbar sind, Schmiermittelzuleitungen (4), mittels denen die Sprühdüsen (3) an eine Schmiermittelversorgung der Glasformmaschine anschließbar sind, Schmiermitteldosierventilen (6), die jeweils in einer Schmiermittelzuleitung (4) angeordnet sind und mittels denen ein den Sprühdüsen (3) zugeleitetes Schmiermittel dosierbar ist, und Druckluftzuleitungen (5), mittels denen die Sprühdüsen (3) an eine Druckluftversorgung der Glasformmaschine anschließbar sind und deren Druckluftbeaufschlagung mittels eines Steuerventils steuerbar ist, **dadurch gekennzeichnet, dass** die Sprühdüsen (3), die Schmiermitteldosierventile (6), die Schmiermittelzuleitungen (4), die Druckluftzuleitungen (5) und die Steuerventile in die Station der Glasformmaschine integriert sind.

2. Vorformschmiervorrichtung nach Anspruch 1, bei der mittels der Sprühdüsen (3) auch die Innenflächen von den Vorformhälften zugeordneten Mündungsringhälften besprühbar sind.

3. Vorformschmiervorrichtung nach Anspruch 1 oder 2, deren Sprühdüsen (3) so ausgerichtet sind, dass sie die Innenflächen der ihnen zugeordneten Vorformhälften und ggf. die Innenflächen der ihnen zugeordneten Mündungsringhälften vollständig mit Schmiermittel besprühen.

4. Vorformschmiervorrichtung nach einem der Ansprüche 1 bis 3, deren Sprühdüsen (3), Schmiermitteldosierventile (6), Schmiermittelzuleitungen (4), Steuerventile und Druckluftzuleitungen (5) in der Station der Glasformmaschine verbaut sind.

5. Vorformschmiervorrichtung nach einem der Ansprüche 1 bis 4, deren Betrieb automatisch erfolgt und deren Schmiermitteldosierventile (6) und Steuerventile an eine Steuervorrichtung der Glasformmaschine anschließbar sind.

6. Vorformschmiervorrichtung nach einem der Ansprüche 1 bis 5, bei der eine Schmierbetriebszeit und/oder ein Schmierintervall jeder Sprühdüse (3) durch Regelung des Betriebs der Schmiermitteldosierventile (6) und der Steuerventile mittels der glasformmaschinenseitigen Steuervorrichtung exakt vorgebbar ist bzw. sind.

7. Vorformschmiervorrichtung nach einem der Ansprüche 1 bis 6, die mittels der glasformmaschinenseitigen Steuervorrichtung so gesteuert wird, dass die auf der Seite eines Vorformhälftenhalters der Station, der die an der einen Seite angeordneten Vorformhälften der Station hält, vorgesehenen Sprühdüsen (3) die Innenflächen der an einem anderen Vorformhälftenhalter der Station gehaltenen Vorformhälften mit Schmiermittel besprühen, wenn die Vorformen beim Verschwenken eines Invertmechanismus der Station zu deren Fertigformseite geöffnet sind, und die auf der Seite des anderen Vorformhälftenhalters der Station, der die an der anderen Seite angeordneten Vorformhälften der Station hält, vorgesehenen Sprühdüsen (3) die Innenflächen der an dem einen Vorformhälftenhalter der Station gehaltenen Vorformhälften mit Schmiermittel besprühen, wenn die Vorformen bei einem folgenden Verschwenken des Invertmechanismus der Station zu deren Fertigformseite geöffnet sind.

8. Vorformschmiervorrichtung nach einem der Ansprüche 1 bis 7, bei der die Sprühdüsen (3), die Schmiermitteldosierventile (6), die Schmiermittelzuleitungen (4) und die Druckluftzuleitungen (5) an Mündungskühltürmen (2) angeordnet sind, die an der Station angeordnet und in Bezug auf die Öffnungsstellung des einen bzw. des anderen Vorformhälftenhalters an der Station fixierbar sind.

9. Vorformschmiervorrichtung nach Anspruch 8, bei der die Mündungskühltürme (2) an der Station in Vertikalrichtung verstellbar angeordnet sind.

10. Vorformschmiervorrichtung nach einem der Ansprüche 1 bis 9, bei der ihre elektrischen Zuleitungen (7) in die Station integriert sind.

11. Vorformschmiervorrichtung nach Anspruch 10, bei der die elektrischen Zuleitungen (7), die Schmiermittelzuleitungen (4) und die Druckluftzuleitungen (5) mittels Schnellkupplungen mit der elektrischen Energieversorgung, der Schmiermittelversorgung und der Druckluftversorgung der Glasformmaschine verbindbar sind.

12. Vorformschmiervorrichtung nach einem der Ansprüche 1 bis 11, die Bestandteil einer schnell wechselbaren Station für eine Glasformmaschine ist.
